# EUROPEAN PATENT APPLICATION

(11) **EP 4 770 188 A1**
(43) Date of publication of application: **01.07.2026**
(21) Application number: 24858393.2
(22) Date of filing: 21.08.2024
(51) Int. Cl.: H04W 28/06

(54) **INFORMATION REPORTING METHOD AND APPARATUS, TERMINAL, AND NETWORK SIDE DEVICE**

(30) Priority: 25.08.2023 CN 202311081708
(71) Applicant: Vivo Mobile Communication Co., Ltd., Dongguan, Guangdong 523863 (CN)
(72) Inventor: BAO, Wei, Dongguan, Guangdong 523863 (CN); CHEN, Li, Dongguan, Guangdong 523863 (CN)
(74) Representative: Lavoix
(86) International application number: PCT/CN2024/113520
(87) International publication number: WO 2025/044850

(57) **Abstract**

This application discloses an information reporting method and apparatus, a terminal, and a network-side device, belonging to the field of communication technologies. The information reporting method of embodiments of this application includes: determining, by a terminal, target statistical data based on a remaining time of a discard timer corresponding to to-be-transmitted data, where the to-be-transmitted data is data that is to be transmitted by the terminal to a network-side device; and sending, by the terminal, first indication information to the network-side device, where the first indication information is used to indicate a data volume of the target statistical data.

## Description

### CROSS-REFERENCE TO RELATED APPLICATIONS

This application claims priority to Chinese Patent Application No. 202311081708.X, filed on August 25, 2023, which is incorporated herein by reference in its entirety.

### TECHNICAL FIELD

This application belongs to the field of communication technologies, and specifically relates to an information reporting method and apparatus, a terminal, and a network-side device.

### BACKGROUND

In the related art, after to-be-transmitted data for uplink transmission by a terminal arrives at a packet data convergence protocol (Packet Data Convergence Protocol, PDCP) layer of the terminal, the PDCP layer of the terminal starts a discard timer. In a case that the discard timer has expired, the to-be-transmitted data that has not been sent to a radio link control (Radio Link Control, RLC) layer will be discarded. In the related art, data discarded due to expiration of the discard timer may be important service data, resulting in a high probability of service failure at the terminal.

### SUMMARY

Embodiments of this application provide an information reporting method and apparatus, a terminal, and a network-side device, which can solve the problem of high probability of service failure at the terminal caused when data discarded due to expiration of a discard timer may be important service data.

According to a first aspect, an information reporting method is provided, including:
determining, by a terminal, target statistical data based on a remaining time of a discard timer corresponding to to-be-transmitted data, where the to-be-transmitted data is data that is to be transmitted by the terminal to a network-side device; and
sending, by the terminal, first indication information to the network-side device, where the first indication information is used to indicate a data volume of the target statistical data.

According to a second aspect, an information reporting method is provided, including:
receiving, by a network-side device, first indication information sent by a terminal, where the first indication information is used to indicate a data volume of target statistical data;
where the target statistical data is determined based on a remaining time of a discard timer corresponding to to-be-transmitted data of the terminal, and the to-be-transmitted data is data that is to be transmitted by the terminal to the network-side device.

According to a third aspect, an information reporting apparatus is provided, where a terminal includes the information reporting apparatus, and the apparatus includes:
a first determining module, configured to determine target statistical data based on a remaining time of a discard timer corresponding to to-be-transmitted data, where the to-be-transmitted data is data that is to be transmitted by the terminal to a network-side device; and
a first sending module, configured to send first indication information to the network-side device, where the first indication information is used to indicate a data volume of the target statistical data.

According to a fourth aspect, an information reporting apparatus is provided, where a network-side device includes the information reporting apparatus, and the apparatus includes:
a receiving module, configured to receive first indication information sent by a terminal, where the first indication information is used to indicate a data volume of target statistical data;
where the target statistical data is determined based on a remaining time of a discard timer corresponding to to-be-transmitted data of the terminal, and the to-be-transmitted data is data that is to be transmitted by the terminal to the network-side device.

According to a fifth aspect, a terminal is provided, where the terminal includes a processor and a memory, the memory stores a program or instructions executable on the processor, and when the program or instructions are executed by the processor, the steps of the method according to the first aspect are implemented.

According to a sixth aspect, a network-side device is provided, where the network-side device includes a processor and a memory, the memory stores a program or instructions executable on the processor, and when the program or instructions are executed by the processor, the steps of the method according to the second aspect are implemented.

According to a seventh aspect, a terminal is provided, including a processor and a communication interface, where
the processor is configured to: determine target statistical data based on a remaining time of a discard timer corresponding to to-be-transmitted data, where the to-be-transmitted data is data that is to be transmitted by the terminal to a network-side device; and
the communication interface is configured to: send first indication information to the network-side device, where the first indication information is used to indicate a data volume of the target statistical data.

According to an eighth aspect, a network-side device is provided, including a processor and a communication interface, where the communication interface is configured to:
receive first indication information sent by a terminal, where the first indication information is used to indicate a data volume of target statistical data; where
the target statistical data is determined based on a remaining time of a discard timer corresponding to to-be-transmitted data of the terminal, and the to-be-transmitted data is data that is to be transmitted by the terminal to the network-side device.

According to a ninth aspect, an information reporting system is provided, including: a terminal and a network-side device, where the terminal may be configured to perform the steps of the method according to the first aspect, and the network-side device may be configured to perform the steps of the method according to the second aspect.

According to a tenth aspect, a readable storage medium is provided, where the readable storage medium stores a program or instructions, and when the program or instructions are executed by a processor, the steps of the method according to the first aspect are implemented or the steps of the method according to the second aspect are implemented.

According to an eleventh aspect, a chip is provided, where the chip includes a processor and a communication interface, the communication interface is coupled to the processor and the processor is configured to run a program or instructions to implement the method according to the first aspect or to implement the method according to the second aspect.

According to a twelfth aspect, a computer program/program product is provided, where the computer program/program product is stored in a storage medium, and the computer program/program product is executed by at least one processor to implement the steps of the method according to the first aspect or to implement the steps of the method according to the second aspect.

In the embodiments of this application, a terminal determines target statistical data based on a remaining time of a discard timer corresponding to to-be-transmitted data, where the to-be-transmitted data is data that is to be transmitted by the terminal to a network-side device; and the terminal sends first indication information to the network-side device, where the first indication information is used to indicate a data volume of the target statistical data. In this way, the terminal sends, to the network-side device, the data volume of the target statistical data determined based on the remaining time of the discard timer corresponding to the to-be-transmitted data, to support the network-side device in allocating an uplink transmission resource for the terminal in consideration of the data volume of the target statistical data for which the discard timer has a small remaining time. This can reduce the probability of discard or transmission suspension of the to-be-transmitted data at a terminal side due to expiration, thereby reducing the probability of service failure at the terminal. In addition, by reducing the probability of discard or transmission suspension of the to-be-transmitted data at the terminal side due to expiration, user experience can also be improved.

### BRIEF DESCRIPTION OF DRAWINGS

FIG. 1 is a block diagram of a wireless communication system to which embodiments of this application are applicable;
FIG. 2 is a first flowchart of an information reporting method provided by an embodiment of this application;
FIG. 3 is a second flowchart of an information reporting method provided by an embodiment of this application;
FIG. 4 is a first structural diagram of an information reporting apparatus provided by an embodiment of this application;
FIG. 5 is a second structural diagram of an information reporting apparatus provided by an embodiment of this application;
FIG. 6 is a schematic structural diagram of a communication device provided by an embodiment of this application;
FIG. 7 is a schematic structural diagram of a terminal provided by an embodiment of this application; and
FIG. 8 is a schematic structural diagram of a network-side device provided by an embodiment of this application.

### DESCRIPTION OF EMBODIMENTS

The technical solutions in the embodiments of this application are clearly described below with reference to the drawings in the embodiments of this application. Apparently, the described embodiments are some embodiments rather than all embodiments of this application. Based on the embodiments in this application, all other embodiments obtained by those of ordinary skill in the art fall within the protection scope of this application.

The terms "first", "second", and the like in the specification and claims of this application are used to distinguish similar objects rather than to describe a specific order or sequence. It should be understood that the terms used in this way are interchangeable under appropriate circumstances so that the embodiments of this application can be implemented in an order other than those illustrated or described herein, and that the objects distinguished by "first" and "second" are generally of the same type and the number of the objects is not limited, for example, there may be one or more first objects. In addition, "or" in the specification and claims indicates at least one of the connected objects. For example, "A or B" covers three cases. To be specific, case 1: including A but not including B; case 2: including B but not including A; and case 3: including both A and B. The term "indicate" in the specification and claims of this application may be an explicit indication or an implicit indication. The explicit indication can be understood as that a sender explicitly informs a receiver of an operation to be performed or a requested result in a sent indication; while the implicit indication can be understood as that a receiver provides a determination according to an indication sent by a sender and determines an operation to be performed or a requested result according to a determination result.

It is worth pointing out that the technology described in the embodiments of this application is not limited to a long term evolution (Long Term Evolution, LTE)/LTE-advanced (LTE-Advanced, LTE-A) system, but can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the described technologies can be used not only for the systems and radio technologies mentioned above, but also for other systems and radio technologies. The following provides a description of a new radio (New Radio, NR) system for exemplary purposes and uses NR terminology in most of the following description, but these technologies can also be applied to applications other than NR system applications, such as the 6th generation (6th Generation, 6G) communication system.

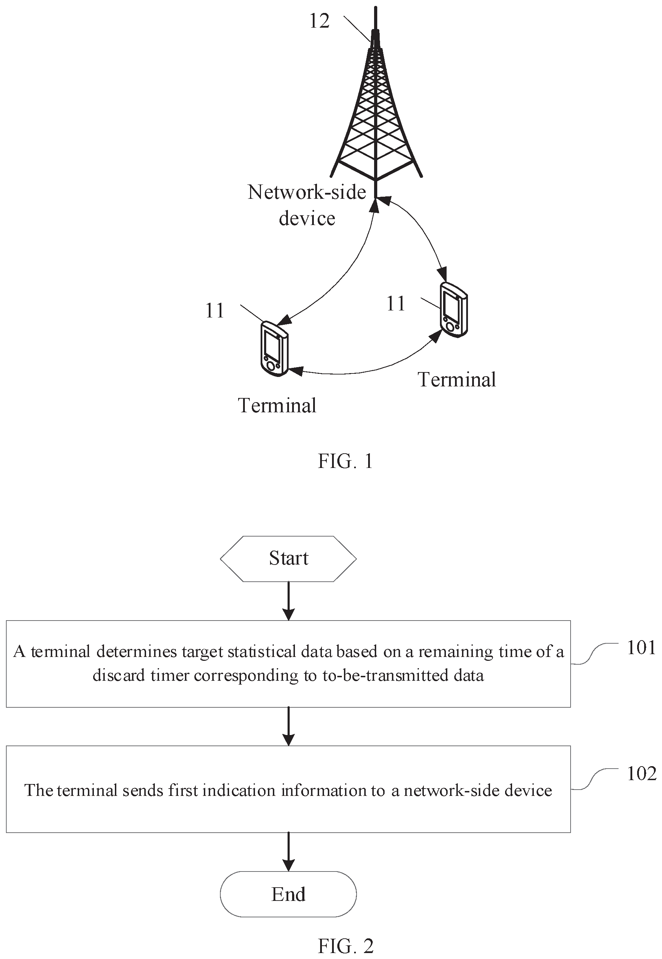

FIG. 1 shows a block diagram of a wireless communication system to which the embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer) which may alternatively be referred to as a notebook computer, a personal digital assistant (Personal Digital Assistant, PDA), a palmtop computer, a netbook, an ultra-mobile personal computer (ultra-mobile personal computer, UMPC), a mobile Internet device (mobile Internet device, MID), an augmented reality (augmented reality, AR)/virtual reality (virtual reality, VR) device, a robot, a wearable device (Wearable Device), vehicle user equipment (Vehicle User Equipment VUE), pedestrian user equipment (Pedestrian User Equipment, PUE), a smart home (a home device with a wireless communication function, such as a refrigerator, a television, a washing machine, or furniture), a game console, a personal computer (personal computer, PC), a teller machine, or a self-service machine. The wearable device includes: a smart watch, a smart bracelet, smart headphones, smart glasses, smart jewelry (smart bracelet, smart bracelet, smart ring, smart necklace, smart anklet, smart foot chain, and the like), a smart wristband, smart clothing, and the like. It should be noted that a specific type of the terminal 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, a WiFi node, and the like, and the base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmission reception point (Transmission Reception Point, TRP), or another suitable term in the art. As long as the same technical effects are achieved, the base station is not limited to a specific technical term. It should be noted that in the embodiments of this application, only a base station in an NR system is taken as an example for introduction, and the specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF or L-NEF), a binding support function (Binding Support Function, BSF), and an application function (Application Function, AF). It should be noted that in the embodiments of this application, only a core network device in an NR system is taken as an example for introduction, and the specific type of the core network device is not limited.

For ease of understanding, some contents involved in the embodiments of this application are described below.

### 1. Data volume statistics in buffer status reporting (Buffer Status Reporting, BSR) process

When a user equipment (User Equipment, UE, that is a terminal) undergoes data interaction with a network, in order to assist the network in performing uplink scheduling, the UE needs to notify the network of a to-be-transmitted uplink data volume (in a buffer status (Buffer Status)) in a buffer of the UE. After obtaining the to-be-transmitted uplink data volume, the network can allocate an uplink resource of an appropriate size to the UE. The Buffer Status reporting process is referred to as buffer status reporting (Buffer Status Reporting, BSR).

At a specific time point, one UE may have uplink data to be transmitted from multiple services, and the data has different quality of service (Quality of Service, QoS) requirements. In order to allow the network to implement different scheduling policies for data with different QoS requirements, the UE can map the uplink data to different logical channels according to the configuration of the network. Different logical channels correspond to the same or different scheduling priorities. The network can configure one or more logical channels with similar QoS requirements into one logical channel group. The UE is supported to configure a maximum of 16 logical channels (Logical CHannel, LCH) and 8 logical channel groups (Logical Channel Group, LCG).

The UE performs BSR at the granularity of logical channel groups. To be specific, the to-be-transmitted uplink data volumes of all logical channels in each logical channel group (LCG) are summed, and the obtained result is mapped according to a mapping table defined by a protocol (the mapping table indicates correspondence between buffer status (Buffer Status, BS) values and an indexes) to obtain a BS index (Index). In the BSR process, the UE reports the index value corresponding to the BS value (value) of each LCG. There are two formats for BS index values, with lengths of 5 bits (bit) or 8 bits, respectively. The purpose of the UE performing BSR based on a logical channel group (rather than a logical channel) is to reduce the overhead of BSR.

The BSR is generated by a medium access control (Medium Access Control, MAC) layer and reported. According to a protocol in the related art, when the MAC layer triggers BSR or a BSR MAC control element (Control Element, CE) is generated, a MAC entity of the UE needs to calculate an uplink buffer status based on uplink data to be sent in one or more logical channels in a radio link control (Radio Link Control, RLC) layer and a packet data convergence protocol (Packet Data Convergence Protocol, PDCP) layer.

### 2. RLC data volume evaluation:

For the purpose of MAC buffer status reporting, the UE shall consider the following as RLC data volume (For the purpose of MAC buffer status reporting, the UE shall consider the following as RLC data volume):
RLC service data units (Service Data Unit, SDU) and RLC SDU segments that have not yet been included in an RLC data protocol data unit (Protocol Data Unit, PDU) (RLC SDUs and RLC SDU segments that have not yet been included in an RLC data PDU);
RLC data PDUs that are pending for initial transmission at the RLC layer (RLC data PDUs that are pending for initial transmission); and
RLC data PDUs that are pending for retransmission at the RLC layer (in RLC AM) (RLC data PDUs that are pending for retransmission (RLC AM)).

In addition, if a STATUS PDU has been triggered and t-StatusProhibit is not running or has expired, the UE shall estimate the size of the STATUS PDU that will be transmitted in the next transmission opportunity, and consider this as part of RLC data volume (In addition, if a STATUS PDU has been triggered and t-StatusProhibit is not running or has expired, the UE shall estimate the size of the STATUS PDU that will be transmitted in the next transmission opportunity, and consider this as part of RLC data volume).

### 3. PDCP data volume evaluation:

For the purpose of MAC buffer status reporting, a transmitting PDCP entity shall consider the following as PDCP data volume (For the purpose of MAC buffer status reporting, the transmitting PDCP entity shall consider the following as PDCP data volume):
the PDCP SDUs for which no PDCP data PDUs have been constructed (the PDCP SDUs for which no PDCP Data PDUs have been constructed);
the PDCP data PDUs that have not been submitted to lower layers (the PDCP Data PDUs that have not been submitted to lower layers);
the PDCP control PDUs (the PDCP Control PDUs);
for AM data radio bearers (Data Radio Bearer, DRB), the PDCP SDUs to be retransmitted (for AM DRBs, the PDCP SDUs to be retransmitted); and
for AM DRBs, the PDCP data PDUs to be retransmitted (for AM DRBs, the PDCP Data PDUs to be retransmitted).

The information reporting method and apparatus, terminal, and network-side device provided by the embodiments of this application are described in detail below through some embodiments and application scenarios thereof with reference to the accompanying drawings.

Referring to FIG. 2, FIG. 2 is a flowchart of an information reporting method provided by an embodiment of this application. As shown in FIG. 2, the information reporting method includes the following steps.

Step 101: A terminal determines target statistical data based on a remaining time of a discard timer corresponding to to-be-transmitted data, where the to-be-transmitted data is data that is to be transmitted by the terminal to a network-side device.

The to-be-transmitted data may be to-be-transmitted uplink data. The to-be-transmitted data may include: a PDCP SDU, a PDCP PDU (or RLC SDU), an RLC PDU, an RLC SDU segment (segment), and the like. This embodiment imposes no limitation on the type of the to-be-transmitted data. The RLC PDU may also be described as an RLC data (Data) PDU, and the PDCP PDU may also be described as a PDCP data (Data) PDU.

The discard timer corresponding to the to-be-transmitted data may be a discard timer (discardTimer) started when a PDCP SDU corresponding to the to-be-transmitted data arrives at a PDCP layer. In an example in which the to-be-transmitted data is a PDCP SDU, the discard timer corresponding to the to-be-transmitted data may be a discardTimer started when the PDCP SDU arrives at the PDCP layer. In an example in which the to-be-transmitted data is a PDCP PDU, the discard timer corresponding to the to-be-transmitted data may be a discardTimer started when a PDCP SDU corresponding to the PDCP PDU arrives at the PDCP layer, where the PDCP SDU corresponding to the PDCP PDU is a PDCP SDU used to generate the PDCP PDU. In an example in which the to-be-transmitted data is an RLC PDU, the discard timer corresponding to the to-be-transmitted data may be a discardTimer started when a PDCP SDU corresponding to the RLC PDU arrives at the PDCP layer, where the PDCP SDU corresponding to the RLC PDU is a PDCP SDU used to generate the RLC PDU.

It should be noted that when a data packet (PDCP SDU) arrives at the PDCP layer, a discardTimer associated with the PDCP SDU is started, and a running time of the discardTimer is pre-configured.

A remaining time of the discard timer (discardTimer) may be a time from a current moment to an expiration moment of the discard timer. The largest running time of the discard timer is pre-configured, and the discard timer expires when the running time of the discard timer reaches the largest running time. The remaining time of the discard timer may be a difference between the largest running time of the discard timer and a current running time of the discard timer; or the remaining time of the discard timer may alternatively be a difference between the largest running time of the discard timer and an elapsed running time of the discard timer at a target time, where the target time may be a time that can be determined by both a terminal and a network side according to a preset rule, for example: a generation time of report signaling carrying information of the remaining time, a time of transmission over an air interface, or a time of initial transmission over an air interface. In different application scenarios, the terminal may use different calculation methods to calculate the remaining time.

In an implementation, the target statistical data includes data, in the to-be-transmitted data, for which the remaining time of the discard timer is less than or equal to a preset time; or the target statistical data includes data, in the to-be-transmitted data, for which the remaining time of the discard timer is less than or equal to a preset time, and the target statistical data further includes a data packet that is located in a buffer of an RLC layer of the terminal and whose corresponding discard timer has expired.

Step 102: The terminal sends first indication information to the network-side device, where the first indication information is used to indicate a data volume of the target statistical data.

The first indication information may include: a data volume of the target statistical data; or the first indication information may include: an interval in which a data volume of the target statistical data is located; or the first indication information may include: an index value corresponding to a data volume of the target statistical data; or the first indication information may include: an index value corresponding to an interval in which a data volume of the target statistical data is located; or the like. This embodiment imposes no limitation on the first indication information.

In an implementation, the data volume of the target statistical data may be a buffer status (Buffer Status, BS) value, and the terminal may report the data volume of the target statistical data according to a mapping table defined by a protocol (the mapping table indicates correspondence between BS values and indexes), and the first indication information may be a BS index value (Index). In the BSR process, the terminal reports an index value corresponding to the BS value (value). There are two formats for BS index values, with lengths of 5 bits and 8 bits, respectively.

Table 1 provides an example of a mapping relationship between BS index values and BS values (that is, the data volume of the target statistical data): according to this example, when a BS value is 50 bytes, a corresponding BS index value (that is, the first indication information) is 6.

**Table 1**

| BS index | BS value (byte) |
|---|---|
| 0 | 0 |
| 1 | ≤ 10 |
| 2 | ≤ 14 |
| 3 | ≤ 20 |
| 4 | ≤ 28 |
| 5 | ≤ 38 |
| 6 | ≤ 53 |
| 7 | ≤ 74 |
| ... | ... |

In addition, the terminal may report the data volume of the target statistical data at the granularity of a logical channel group, a logical channel, or a DRB. In an example in which the data volume of the target statistical data is reported at the granularity of a logical channel group, data volumes of the target statistical data in the to-be-transmitted uplink data of all logical channels in each logical channel group (LCG) are summed, and the obtained result is mapped according to the mapping table defined by a protocol to obtain the first indication information for reporting. For example, in the BSR process, the terminal reports the index value corresponding to the BS value (that is, the data volume of the target statistical data) of each LCG.

In an implementation, the terminal may send the first indication information to the network-side device during a BSR process, where the first indication information is used to indicate the data volume of the target statistical data.

In an implementation, the method further includes: the terminal sends third indication information to the network-side device, where the third indication information is used to indicate at least one of the following: the smallest value of the remaining time of the discard timer corresponding to first statistical data; and the largest value of the running time of the discard timer corresponding to the first statistical data. The first statistical data includes data, in the target statistical data, for which the remaining time of the discard timer is less than or equal to a preset time.

In an implementation, the terminal determines the target statistical data based on the remaining time of the discard timer corresponding to the to-be-transmitted data, where the to-be-transmitted data is data that is to be transmitted by the terminal to the network-side device; the terminal determines the data volume of the target statistical data; and the terminal sends the first indication information to the network-side device, where the first indication information is used to indicate the data volume of the target statistical data.

It should be noted that, at the terminal side, after an uplink data packet arrives at the PDCP layer, the PDCP starts a timer (that is, a discard timer (discardTimer)). When the timer expires: if the data packet has not been submitted to a lower layer (RLC layer), the PDCP layer discards the data packet; and if the data packet has already been submitted to the lower layer (RLC layer), the PDCP layer sends a discard indication to the RLC layer (If the corresponding PDCP Data PDU has already been submitted to lower layers, the discard is indicated to lower layers). In this embodiment of this application, when the data packet is about to expire (for example, when the remaining time for expiration of the timer is less than or equal to a specific threshold value), the terminal can report the data volume of the data that is about to expire, so that the network can accelerate scheduling, thereby reducing the probability that the data packet is discarded due to expiration.

It should be noted that the expiration of the discardTimer causes the uplink data packet to be discarded before being transmitted over an air interface, affecting user experience. If the discarded data is important service data, it leads to poor user experience. In this embodiment of this application, the terminal can report the data volume that is about to expire, so that the network side can perform scheduling as soon as possible, thereby improving user experience.

In this embodiment of this application, the terminal determines the target statistical data based on the remaining time of the discard timer corresponding to the to-be-transmitted data, where the to-be-transmitted data is data that is to be transmitted by the terminal to the network-side device; and the terminal sends the first indication information to the network-side device, where the first indication information is used to indicate the data volume of the target statistical data. In this way, the terminal sends, to the network-side device, the data volume of the target statistical data determined based on the remaining time of the discard timer corresponding to the to-be-transmitted data, to support the network-side device in allocating an uplink transmission resource for the terminal in consideration of the data volume of the target statistical data for which the discard timer has a small remaining time. This can reduce the probability that the to-be-transmitted data at the terminal side is discarded or transmission is suspended due to expiration, thereby reducing the probability of service failure at the terminal. In addition, by reducing the probability that the to-be-transmitted data at the terminal side is discarded or transmission is suspended due to expiration, user experience can also be improved.

Optionally, the target statistical data includes data, in the to-be-transmitted data, for which the remaining time of the discard timer is less than or equal to a preset time.

The preset time may be configured by the network-side device or prescribed by a protocol. The data for which the remaining time of the discard timer is less than or equal to the preset time may be considered as data that is about to expire.

In an implementation, the network side or protocol can configure one time threshold Tthreshold (that is, the preset time) for one logical channel, DRB, or logical channel group; a PDCP layer of the UE determines data packet sets to be counted, where a remaining time of the discardTimer of the data in the data packet sets to be counted is less than or equal to the Tthreshold. The PDCP layer counts a data volume of data packets, in the data packet sets, that have not been sent to the RLC; and the PDCP layer notifies the RLC layer of information such as identifiers of data packets, in the data packet sets, that have been sent to the RLC layer, and the RLC counts the data volume corresponding to the data packets, in the data packet sets, that have been sent to the RLC layer. The terminal (for example, a UE MAC layer entity) takes a sum of the data volume counted by the PDCP layer and the data volume counted by the RLC layer as the data volume of the target statistical data.

In this implementation, the target statistical data includes data, in the to-be-transmitted data, for which the remaining time of the discard timer is less than or equal to a preset time, so that the terminal reports, to the network-side device, the data volume of the data for which the remaining time of the discard timer is less than or equal to the preset time, and the network-side device can allocate, based on the reported data volume, an uplink transmission resource adapted to the reported data volume for the terminal, thereby reducing the probability that the to-be-transmitted data at the terminal side is discarded or transmission is suspended due to expiration.

Optionally, the target statistical data includes at least one of first statistical data and second statistical data, and the terminal determining the target statistical data based on the remaining time of the discard timer corresponding to the to-be-transmitted data includes at least one of the following:
a packet data convergence protocol PDCP layer of the terminal determines a first data packet in the PDCP layer based on the remaining time of the discard timer corresponding to the to-be-transmitted data, where the first statistical data includes the first data packet; and
the PDCP layer of the terminal determines a second data packet that has been transmitted to a radio link control RLC layer of the terminal based on the remaining time of the discard timer corresponding to the to-be-transmitted data, where the second statistical data is determined based on the second data packet.

The first data packet may include a data packet, in the PDCP layer, for which the remaining time of the discard timer is less than or equal to a preset time. The first data packet may be data that is to be transmitted by the terminal to the network-side device. For example, the first data packet may be a PDCP SDU for which the remaining time of the discard timer is less than or equal to the preset time.

The second data packet may include a data packet that is transmitted to the RLC layer of the terminal and for which the remaining time of the corresponding discard timer is less than or equal to a preset time; or the second data packet may include a data packet that is transmitted to the RLC layer of the terminal and for which the remaining time of the corresponding discard timer is less than or equal to a preset time, and the second data packet may further include a data packet that is located in a buffer of the RLC layer of the terminal and whose corresponding discard timer has expired. The second data packet may be data that is to be transmitted by the terminal to the network-side device. For example, the second data packet may be a PDCP PDU for which the remaining time of the discard timer is less than or equal to the preset time.

It should be noted that data received by the PDCP layer from an upper layer is referred to as a PDCP SDU; and data sent by the PDCP layer to a lower layer (that is, the RLC layer) is referred to as a PDCP PDU, where the PDCP PDU is an RLC SDU.

In addition, the RLC layer of the terminal can determine the second statistical data based on the second data packet.

In this implementation, the PDCP layer of the terminal determines the first data packet in the PDCP layer based on the remaining time of the discard timer corresponding to the to-be-transmitted data, and the first statistical data includes the first data packet, so that the PDCP layer can count the first data packets, in the PDCP layer, for which the remaining time of the discard timers is less than or equal to the preset time, and includes the data volume of the first data packet into the data volume of the target statistical data reported to the network side, to support the network-side device in allocating an uplink transmission resource for the terminal in consideration of the first data packet that is about to expire in the PDCP layer. This can reduce the probability of expiration of the data packet in the PDCP layer of the terminal, thereby reducing the probability that the data packet in the PDCP layer of the terminal is discarded or transmission is suspended due to expiration.

In this implementation, the PDCP layer of the terminal determines, based on the remaining time of the discard timer corresponding to the to-be-transmitted data, the second data packet that has been transmitted to the radio link control RLC layer of the terminal, and the second statistical data is determined based on the second data packet, so that the PDCP layer can count the second data packets transmitted to the RLC layer of the terminal and for which the remaining times of the discard timers are less than or equal to the preset time, and thus the RLC layer includes the data volume of the second data packet into the data volume of the target statistical data reported to the network side, to support the network-side device in allocating an uplink transmission resource for the terminal in consideration of the second data packet that is about to expire and that is transmitted to the RLC layer of the terminal. This can reduce the probability of expiration of the data packet that has been transmitted to the RLC layer of the terminal, thereby reducing the probability that the data packet that has been transmitted to the RLC layer of the terminal is discarded or transmission is suspended due to expiration.

Optionally, the first data packet includes a data packet, in the PDCP layer, for which the remaining time of the discard timer is less than or equal to a preset time;
or
the second data packet includes a data packet that is transmitted to the RLC layer of the terminal and for which the remaining time of the corresponding discard timer is less than or equal to a preset time.

Optionally, after the PDCP layer of the terminal determines, based on the remaining time of the discard timer corresponding to the to-be-transmitted data, the second data packet that has been transmitted to the RLC layer of the terminal, the method further includes:
the RLC layer of the terminal determines the second statistical data based on the second data packet.

The second statistical data may include: a second data packet for which an RLC data PDU has not been generated, or segment data of the second data packet; a first RLC data PDU that is generated for the second data packet and has not started transmission; a second RLC data PDU that is generated for the second data packet for retransmission; and the like.

In this implementation, the PDCP layer of the terminal determines, based on the remaining time of the discard timer corresponding to the to-be-transmitted data, the second data packet that has been transmitted to the RLC layer of the terminal, and the RLC layer of the terminal determines the second statistical data based on the second data packet, so that the RLC layer can count the to-be-reported data volume of the RLC layer through the second data packet counted by the PDCP layer.

Optionally, before the RLC layer of the terminal determines the second statistical data based on the second data packet, the method further includes:
the RLC layer of the terminal receives second indication information sent by the PDCP layer of the terminal, where the second indication information is used to indicate the second data packet.

The second indication information may include related information of the second data packet, such as an identifier; or the second indication information may include a first identifier, where the first identifier is an identifier of a data packet with the largest identifier among the second data packets or the first identifier is an identifier of the last or latest second data packet sent to the RLC layer by the PDCP layer among the second data packets; or the second indication information may include a second identifier, where a difference between the second identifier and an identifier of a data packet with the largest identifier among the second data packets is 1 or a difference between the second identifier and an identifier of the last or latest second data packet sent to the RLC layer by the PDCP layer among the second data packets is 1; or the second indication information may include a third identifier, where the third identifier is greater than an identifier of a data packet with the largest identifier among the second data packets or the third identifier is greater than an identifier of the last or latest second data packet sent to the RLC layer by the PDCP layer among the second data packets, and a difference between the third identifier and the identifier of the data packet with the largest identifier among the second data packets may be configured by the network-side device or prescribed by a protocol, or a difference between the third identifier and the identifier of the last or latest second data packet sent to the RLC layer by the PDCP layer may be configured by the network-side device or prescribed by a protocol; or the like. This embodiment imposes no limitation on the second indication information. The above identifiers (such as the first identifier, the second identifier, the third identifier, or the identifier of the second data packet) are all identifiers allocated for one PDCP entity.

In an implementation, the PDCP layer of the terminal notifies the RLC layer of identifiers (for example, serial numbers) of all PDCP SDUs that are about to expire, to allow the RLC layer to count a data volume that is about to expire. The PDCP layer may notify the RLC layer of a PDCP layer serial number (for example, PDCP SN or counter) of the PDCP SDU that is about to expire, and the RLC layer performs data volume statistics for the PDCP layer serial number notified by the PDCP layer; or the PDCP layer may notify the RLC layer of the last one of the PDCP layer serial numbers of all the PDCP SDUs that are about to expire, and the RLC layer performs data volume statistics for the PDCP layer serial numbers notified by the PDCP layer and the data of PDCP SDUs before these PDCP layer serial numbers.

In this implementation, the RLC layer of the terminal receives the second indication information sent by the PDCP layer of the terminal, where the second indication information is used to indicate the second data packet, and the RLC layer of the terminal determines the second statistical data based on the second data packet. In this way, the RLC layer can accurately know, based on the second indication information sent by the PDCP layer, the data packet to be counted, thereby realizing the counting of the to-be-reported data volume of the RLC layer.

Optionally, the second indication information includes at least one of the following:
an identifier of the second data packet;
a first identifier, where the first identifier is an identifier of a data packet with the largest identifier among the second data packets, or the first identifier is an identifier of the latest data packet sent to the RLC layer by the PDCP layer among the second data packets; and
a second identifier, where a difference between the second identifier and an identifier of a data packet with the largest identifier among the second data packets is 1, or a difference between the second identifier and an identifier of the latest data packet sent to the RLC layer by the PDCP layer among the second data packets is 1.

The first identifier being an identifier of the latest data packet sent to the RLC layer by the PDCP layer among the second data packets may be understood as that the first identifier is an identifier of the last data packet sent to the RLC layer by the PDCP layer among the second data packets.

The difference between the second identifier and the identifier of the latest data packet sent to the RLC layer by the PDCP layer among the second data packets being 1 may be understood as that the difference between the second identifier and the identifier of the last data packet sent to the RLC layer by the PDCP layer among the second data packets is 1.

The second indication information may include an identifier of the second data packet, and the identifier of the second data packet may be a serial number of the second data packet at the PDCP layer, for example, a PDCP serial number (Serial Number, SN) or a PDCP counter (counter) value; or the second indication information may include a first identifier, where the first identifier is an identifier of a data packet with the largest identifier among the second data packets, and the RLC layer determines the data packet with the largest identifier among the second data packets based on the first identifier, and takes a data packet whose identifier is less than or equal to the first identifier as the second data packet; or the second indication information may include a first identifier, where the first identifier is an identifier of the latest data packet sent to the RLC layer by the PDCP layer among the second data packets, and the RLC layer takes the data packet with the first identifier and a data packet received before the data packet with the first identifier as the second data packets; or the second indication information may include a second identifier, where a difference between the second identifier and an identifier of a data packet with the largest identifier among the second data packets is 1, and the RLC layer determines the data packet with the largest identifier among the second data packets based on a difference between the second identifier and 1, and takes a data packet whose identifier is less than the second identifier as the second data packet; or the second indication information may include a second identifier, where a difference between the second identifier and an identifier of the latest data packet sent to the RLC layer by the PDCP layer among the second data packets is 1, and the RLC layer takes a data packet received before the data packet with the second identifier as the second data packet.

In this implementation, based on the identifier of the second data packet, the first identifier, or the second identifier, the RLC layer can quickly determine the data packet that is about to expire.

Optionally, the second statistical data includes at least one of the following:
the second data packet for which an RLC data PDU has not been generated;
segment data of the second data packet for which an RLC data PDU has not been generated;
a first RLC data PDU generated for the second data packet, where the first RLC data PDU has not started initial transmission; and
a second RLC data PDU generated for the second data packet, where the second RLC data PDU is pending for retransmission by the RLC layer.

The second data packet for which an RLC data PDU has not been generated may be an RLC SDU.

The segment data of the second data packet for which an RLC data PDU has not been generated may be RLC SDU segments that have not yet been included in an RLC data PDU (RLC SDU segments that have not yet been included in an RLC data PDU).

The first RLC data PDU may be an RLC data PDU that is pending for initial transmission (RLC data PDUs that are pending for initial transmission).

The second RLC data PDU may be an RLC data PDU that is pending for retransmission (RLC AM) (RLC data PDUs that are pending for retransmission (RLC AM)).

It should be noted that the second data packet transmitted from the PDCP layer to the RLC layer is a PDCP PDU or an RLC SDU; and the second data packet is processed at the RLC layer to generate an RLC PDU. The data obtained after the second data packet is processed at the RLC layer is an RLC SDU segment and/or an RLC PDU.

It should be noted that, depending on a size of an air interface resource allocated by the network side, sometimes an RLC PDU generated by a complete RLC SDU can be mapped to one air interface time-frequency resource; sometimes an RLC PDU generated by a complete RLC SDU cannot be mapped to one air interface time-frequency resource (in this case, the allocated air interface resource is smaller than a size required for transmission of the RLC PDU generated by the complete RLC SDU), and in this case, the RLC SDU needs to be segmented, where the previous segment generates one RLC PDU, and the subsequent segment serves as an RLC SDU segment waiting to be mapped to a resource scheduled subsequently by the network side for transmission. One RLC PDU can carry data of one RLC SDU and a corresponding RLC header (header), or data of one RLC SDU segment and a corresponding RLC header.

Optionally, the target statistical data further includes: a data packet that is located in a buffer of the RLC layer of the terminal and whose corresponding discard timer has expired.

The PDCP layer of the terminal indicates, to the RLC layer, a data packet whose discard timer has expired. In an implementation, for a data packet that has been sent to the RLC, when the discard timer associated with the data packet has expired, the PDCP layer of the terminal indicates discard to the RLC layer.

In addition, the second statistical data may include the data packet that is located in the buffer of the RLC layer of the terminal and whose corresponding discard timer has expired, and when determining the second statistical data, the RLC layer of the terminal may include the data packet that is located in the buffer of the RLC layer of the terminal and whose corresponding discard timer has expired into the second statistical data. The RLC layer of the terminal may include, into the second statistical data, a data packet that is located in the buffer of the RLC layer and whose corresponding discard timer has expired, as indicated to the RLC layer by the PDCP layer.

The PDCP layer indicating, to the RLC layer, a data packet whose corresponding discard timer has expired may be that the PDCP layer indicates, to the RLC layer, that the discard timers corresponding to some data packets have expired, or the PDCP layer indicates the RLC layer to discard some data packets, and the data packets indicated to be discarded are data packets whose corresponding discard timers have expired.

In addition, when performing data volume statistics, the RLC layer may also add the data of the PDCP SDU indicated to be discarded by the PDCP layer to the data volume statistics.

In an implementation, if a data packet or a data packet segment whose discardTimer has expired (which is indicated to be discarded by the PDCP layer) is pending for initial transmission or retransmission in the RLC layer, or an RLC SDU containing the data packet or the data packet segment is pending for initial transmission or retransmission in the RLC layer, the RLC can also count the data volume of the data packet whose discardTimer has expired or that is indicated to be discarded by the PDCP layer. In some cases, after the data is transmitted from the PDCP to the RLC, even if the discardTimer has expired or is indicated to be discarded by the PDCP layer, the RLC does not allow discarding. In this case, the data packet that has expired or that is indicated to be discarded by the PDCP layer also needs to be counted. Since the data packet that has expired or that is indicated to be discarded by the PDCP layer is sent to the network side earlier than the data packet that is about to expire, the network side, to avoid expiration of the data packet, needs to allocate a sufficiently large resource to the UE to accommodate the data packet that has expired or that is indicated to be discarded by the PDCP layer and the data packet that is about to expire.

It should be noted that when the discardTimer expires for a PDCP SDU, the PDCP layer shall discard the PDCP SDU along with the corresponding PDCP data PDU. If the corresponding PDCP data PDU has already been sent to the RLC layer, discard is indicated to the RLC layer (When the discardTimer expires for a PDCP SDU, the transmitting PDCP entity shall discard the PDCP SDU along with the corresponding PDCP Data PDU. If the corresponding PDCP Data PDU has already been submitted to lower layers, the discard is indicated to lower layers).

In this implementation, the target statistical data further includes: a data packet that is located in the buffer of the RLC layer of the terminal and whose corresponding discard timer has expired (that is, a data packet indicated to be discarded by the PDCP layer, or a data packet whose corresponding discard timer has expired, as indicated by the PDCP layer), so that the data volume of the data packet that is located in the buffer of the RLC layer and whose discard timer has expired or that is indicated to be discarded by the PDCP layer but for which discard has not been performed can be included into the data volume of the target statistical data reported to the network side, and the network-side device can allocate an adapted uplink transmission resource for the terminal in consideration of the data volume of the data packet that is located in the buffer of the RLC layer and whose discard timer has expired or that is indicated to be discarded by the PDCP layer but for which discard has not been performed, and thus the allocated uplink transmission resource can accommodate the data packet that has expired or that is indicated to be discarded by the PDCP layer and the data packet that is about to expire, thereby reducing the probability of expiration of the to-be-transmitted data that has not expired at the terminal side.

Optionally, the method further includes:
the terminal sends third indication information to the network-side device, where the third indication information is used to indicate at least one of the following:
the smallest value of the remaining time of the discard timer corresponding to the target statistical data; and
the largest value of the running time of the discard timer corresponding to the target statistical data.

In an implementation, the target statistical data includes data, in the to-be-transmitted data, for which the remaining time of the discard timer is less than or equal to a preset time, the terminal sends third indication information to the network-side device, and the third indication information is used to indicate at least one of the following: the smallest value of the remaining time of the discard timer corresponding to the target statistical data, and the largest value of the running time of the discard timer corresponding to the target statistical data.

In an implementation, a report reported by the terminal may contain both the first indication information and the third indication information, where the first indication information is used to indicate a data volume of the data packet whose discardTimer has expired and a data volume of the data packet that is about to expire, and a sum of the data volume of the data packet that has expired and the data volume of the data packet that is about to expire is a critical data volume; and the third indication information is used to indicate the smallest remaining time of the discardTimer associated with the data packet whose discardTimer has not expired.

In this implementation, the terminal sends third indication information to the network-side device, where the third indication information is used to indicate at least one of the following: the smallest value of the remaining time of the discard timer corresponding to the target statistical data; and the largest value of the running time of the discard timer corresponding to the target statistical data. In this way, the network-side device can determine the time for scheduling an uplink transmission resource for the terminal in consideration of the smallest value of the remaining time of the discard timer or the largest value of the running time of the discard timer, so as to minimize the probability that the discard timer corresponding to part of the to-be-transmitted data expires due to untimely scheduling, thereby further reducing the probability of expiration of the to-be-transmitted data that has not expired at the terminal side, and reducing the possibility of the to-be-transmitted data being discarded.

Optionally, the preset time is configured by the network-side device or prescribed by a protocol.

Optionally, the method further includes:
the terminal sends fourth indication information to the network-side device, where the fourth indication information is used to indicate a total data volume of data packets, in the to-be-transmitted data, whose corresponding discard timers have expired.

In an implementation, the first indication information is used to indicate a data volume of target statistical data, the target statistical data may include data, in the to-be-transmitted data, for which the remaining time of the discard timer is less than or equal to a preset time, and the target statistical data may be data, in the to-be-transmitted data, whose corresponding discard timer has not expired. The fourth indication information may be used to indicate a total data volume of data packets that are located in the buffer of the RLC layer of the terminal and whose corresponding discard timers have expired.

It should be noted that the terminal may carry the first indication information and the fourth indication information in one report, where the data volume that is about to expire is indicated through the first indication information, and the data volume that has expired is indicated through the fourth indication information, thereby facilitating the scheduling by the network side.

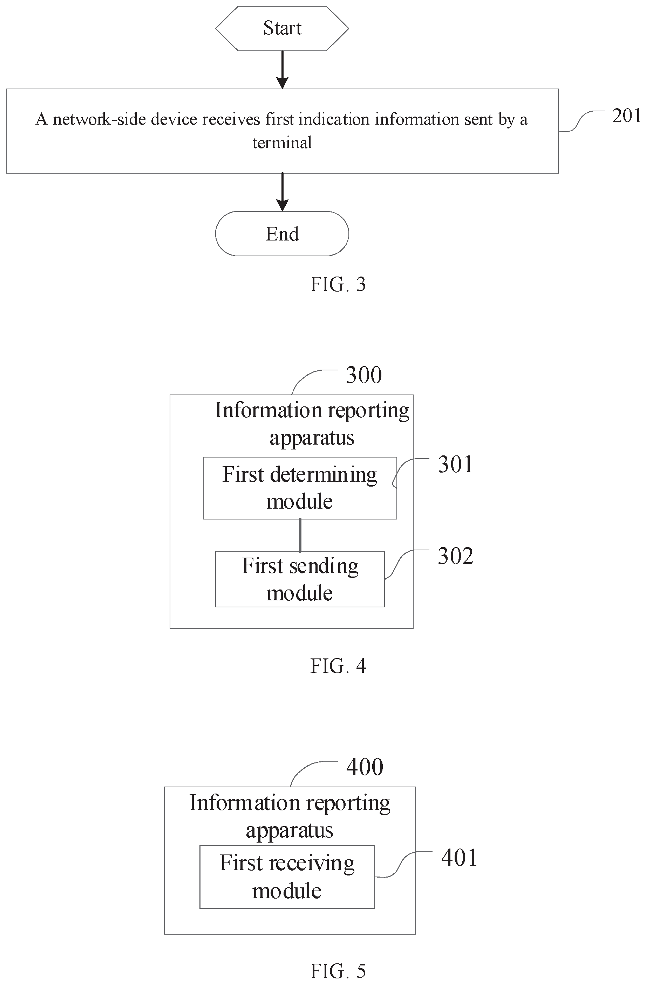

Referring to FIG. 3, FIG. 3 is a flowchart of an information reporting method provided by an embodiment of this application. As shown in FIG. 3, the information reporting method includes the following steps.

Step 201. A network-side device receives first indication information sent by a terminal, where the first indication information is used to indicate a data volume of target statistical data, where
the target statistical data is determined based on a remaining time of a discard timer corresponding to to-be-transmitted data of the terminal, and the to-be-transmitted data is data that is to be transmitted by the terminal to the network-side device.

Optionally, the target statistical data includes data, in the to-be-transmitted data, for which the remaining time of the discard timer is less than or equal to a preset time.

Optionally, after the network-side device receives the first indication information sent by the terminal, the method further includes:
the network-side device allocates an uplink transmission resource for the terminal based on the first indication information.

Optionally, the target statistical data further includes: a data packet that is located in a buffer of an RLC layer of the terminal and whose corresponding discard timer has expired.

Optionally, the preset time is configured by the network-side device or prescribed by a protocol.

Optionally, the method further includes:
the network-side device receives third indication information sent by the terminal, where the third indication information is used to indicate at least one of the following:
the smallest value of the remaining time of the discard timer corresponding to the target statistical data; and
the largest value of the running time of the discard timer corresponding to the target statistical data.

Optionally, the method further includes:
the network-side device receives fourth indication information sent by the terminal, where the fourth indication information is used to indicate a total data volume of data packets, in the to-be-transmitted data, whose corresponding discard timers have expired.

In this embodiment of this application, the terminal sends, to the network-side device, the data volume of the target statistical data determined based on the remaining time of the discard timer corresponding to the to-be-transmitted data, to support the network-side device in allocating an uplink transmission resource for the terminal in consideration of the data volume of the target statistical data for which the discard timer has a small remaining time. This can reduce the probability that the to-be-transmitted data at the terminal side is discarded or transmission is suspended due to expiration, thereby reducing the probability of service failure at the terminal.

It should be noted that this embodiment is an implementation of the network-side device corresponding to the embodiment shown in FIG. 2. For a specific implementation of this embodiment, reference may be made to the relevant description of the embodiment shown in FIG. 2. To avoid repetition, details are not described herein again.

The information reporting method provided by this embodiment of this application is described below using several specific embodiments.

### Embodiment 1:

Step (11): A UE receives configuration information of the network-side device: a time threshold Tthreshold of DRB1 or PDCP entity 1.

Step (12): For uplink data transmitted through DRB1 or PDCP entity 1, when data packet 1, data packet 2, data packet 3, and data packet 4 successively arrive at a PDCP layer of the UE, the PDCP layer starts discardTimer1, discardTimer2, discardTimer3, and discardTimer4, respectively.

Step (13): When the UE generates reporting information, the PDCP layer of the UE checks remaining times of discardTimer1, discardTimer2, discardTimer3, and discardTimer4, where the remaining times of discardTimer1, discardTimer2, and discardTimer3 are all less than the Tthreshold; the remaining time of discardTimer4 is greater than the Tthreshold; data packet 1 and data packet 2 have been sent to an RLC layer; and data packet 3 has not been sent to the RLC layer.

Step (14): The PDCP layer of the UE counts a to-be-reported data volume; and
the PDCP layer of the UE includes a data packet size of data packet 3 into the to-be-reported data volume.

Step (15): The PDCP layer notifies the RLC layer of the UE that the data volumes of data packet 1 and data packet 2 need to be included into the to-be-reported data volume. For example, the PDCP layer may notify the RLC layer of a packet identifier list, where the list includes packet identifiers of data packet 1 and data packet 2.

Step (16): The RLC layer of the UE counts the to-be-reported data volume;
if an RLC data PDU has not been generated for data packet 1 or data packet 2, the RLC layer includes the data volume of data packet 1 or data packet 2 for which an RLC data PDU has not been generated into the to-be-reported data volume;
if an RLC data PDU has not been generated for segment data of data packet 1 or data packet 2, the RLC layer includes the data volume of the segment data for which an RLC data PDU has not been generated into the to-be-reported data volume;
if an RLC data PDU has been generated for all or part of the data of data packet 1 or data packet 2, but initial transmission has not been started, the RLC layer includes the generated RLC data PDU into the to-be-reported data volume; and
if an RLC data PDU has been generated for all or part of the data of data packet 1 or data packet 2, but the RLC data PDU is pending for retransmission, the RLC layer includes the RLC data PDU into the to-be-reported data volume.

Step (17): A MAC layer of the terminal obtains, based on the to-be-reported data volume counted by the PDCP layer and the to-be-reported data volume counted by the RLC layer, the to-be-reported data volume that is about to expire, where the to-be-reported data volume that is about to expire is a sum of the to-be-reported data volume counted by the PDCP layer and the to-be-reported data volume counted by the RLC layer.

The terminal reports the to-be-reported data volume that is about to expire to the network-side device, and the network-side device schedules an uplink resource based on the data volume that is about to expire.

### Embodiment 2:

Steps (21) to (24): the same as steps (11) to (14) of Embodiment 1.

Step (25): The PDCP layer of the UE notifies the RLC layer of the UE that data packet 2 and the data packets previously sent to the RLC layer need to be included into the to-be-reported data volume. For example, the PDCP layer may notify the RLC layer of an identifier of data packet 2, where a data packet corresponding to the identifier and data packets before the data packet corresponding to the identifier in the RLC layer all need to be counted, to be specific, data packet 2 and data packet 1 need to be counted; or the PDCP layer may notify the RLC layer of an identifier of data packet 3, where data packets before a data packet corresponding to the identifier in the RLC layer all need to be counted, to be specific, data packet 2 and data packet 1 need to be counted.

Steps (26) to (27): the same as steps (16) to (17) of Embodiment 1.

### Embodiment 3:

Step (31): A UE receives configuration information of a network-side device: a time threshold Tthreshold of DRB1 or PDCP entity 1.

Step (32): For uplink data transmitted through DRB1 or PDCP entity 1, when data packet 1, data packet 2, data packet 3, and data packet 4 successively arrive at a PDCP layer of the UE, the PDCP layer starts discardTimer1, discardTimer2, discardTimer3, and discardTimer4, respectively.

Step (33): When discardTimer1 has expired, the PDCP layer of the UE notifies an RLC layer of the UE that data packet 1 has expired or the PDCP layer of the UE sends, to the RLC layer, a discard indication associated with data packet 1.

Step (34): When the UE generates reporting information, the PDCP layer of the UE checks remaining times of discardTimer1, discardTimer2, discardTimer3, and discardTimer4, where the remaining times of discardTimer2 and discardTimer3 are less than the Tthreshold; the remaining time of discardTimer4 is greater than the Tthreshold; data packet 1 and data packet 2 have been sent to the RLC layer; and data packet 3 has not been sent to the RLC layer.

Step (35): The PDCP layer of the UE counts to-be-reported data volume; and
the PDCP layer of the UE includes a data packet size of data packet 3 into the to-be-reported data volume.

Step (36): The RLC layer of the UE counts the to-be-reported data volume;
if an RLC data PDU has not been generated for data packet 1 or data packet 2, the RLC layer includes the data volume of data packet 1 or data packet 2 for which an RLC data PDU has not been generated into the to-be-reported data volume;
if an RLC data PDU has not been generated for segment data of data packet 1 or data packet 2, the RLC layer includes the data volume of the segment data for which an RLC data PDU has not been generated into the to-be-reported data volume;
if an RLC data PDU has been generated for all or part of the data of data packet 1 or data packet 2, but initial transmission has not been started, the RLC layer includes the generated RLC data PDU into the to-be-reported data volume; and
if an RLC data PDU has been generated for all or part of the data of data packet 1 or data packet 2, but the RLC data PDU is pending for retransmission, the RLC layer includes the RLC data PDU into the to-be-reported data volume.

It should be noted that although data packet 1 has expired, the RLC layer may place data packet 1 in a buffer without discarding the packet, and the RLC layer still transmits data packet 1 over an air interface. Therefore, data packet 1 placed in the buffer of the RLC layer needs to be counted.

Step (37): A MAC layer of the terminal obtains, based on to-be-reported data volume counted by the PDCP layer and to-be-reported data volume counted by the RLC layer, to-be-reported data volume that is about to expire, where the to-be-reported data volume that is about to expire is a sum of the to-be-reported data volume counted by the PDCP layer and the to-be-reported data volume counted by the RLC layer.

The terminal reports the to-be-reported data volume that is about to expire to the network-side device, and the network-side device schedules an uplink resource based on the data volume that is about to expire.

For example, the UE can separately report to-be-transmitted data volume that has expired and data volume that is about to expire of one LCH/LCG in one report signaling, that is, reporting two BS values, so that the network side can obtain more accurate and comprehensive information for scheduling of the uplink resource.

### Embodiment 4:

With BS reporting, the UE reports the smallest remaining time of the discardtimer or the elapsed running time of the discardtimer with the largest running time among the data packets that have not expired.

The above reporting of the BS and the remaining time may be reporting per LCH or reporting per LCG.

In this embodiment of this application, the terminal accurately determines the reported data volume, so that the network-side device allocates sufficient UL grant (uplink resource) to avoid a situation of uplink data expiration.

The information reporting method provided by this embodiment of this application may be executed by an information reporting apparatus. In this embodiment of this application, an example in which the information reporting apparatus executes the information reporting method is used to illustrate the information reporting apparatus provided by this embodiment of this application.

Referring to FIG. 4, FIG. 4 is a structural diagram of an information reporting apparatus provided by an embodiment of this application. A terminal includes the information reporting apparatus. As shown in FIG. 4, the information reporting apparatus 300 includes:
a first determining module 301, configured to determine target statistical data based on a remaining time of a discard timer corresponding to to-be-transmitted data, where the to-be-transmitted data is data that is to be transmitted by the terminal to a network-side device; and
a first sending module 302, configured to send first indication information to the network-side device, where the first indication information is used to indicate a data volume of the target statistical data.

Optionally, the target statistical data includes data, in the to-be-transmitted data, for which the remaining time of the discard timer is less than or equal to a preset time.

Optionally, the target statistical data includes at least one of first statistical data and second statistical data, and the first determining module is specifically configured to perform at least one of the following:
determining, through a packet data convergence protocol PDCP layer of the terminal, a first data packet in the PDCP layer based on the remaining time of the discard timer corresponding to the to-be-transmitted data, where the first statistical data includes the first data packet; and
determining, through the PDCP layer of the terminal, a second data packet that has been transmitted to a radio link control RLC layer of the terminal based on the remaining time of the discard timer corresponding to the to-be-transmitted data, where the second statistical data is determined based on the second data packet.

Optionally, the first data packet includes a data packet, in the PDCP layer, for which the remaining time of the discard timer is less than or equal to a preset time;
or
the second data packet includes a data packet that is transmitted to the RLC layer of the terminal and for which the remaining time of the corresponding discard timer is less than or equal to a preset time.

Optionally, the first determining module is further configured to:
determine, through the RLC layer of the terminal, the second statistical data based on the second data packet.

Optionally, the first determining module is further configured to:
receive, through the RLC layer of the terminal, second indication information sent by the PDCP layer of the terminal, where the second indication information is used to indicate the second data packet.

Optionally, the second indication information includes at least one of the following:
an identifier of the second data packet;
a first identifier, where the first identifier is an identifier of a data packet with the largest identifier among the second data packets, or the first identifier is an identifier of the latest data packet sent to the RLC layer by the PDCP layer among the second data packets; and
a second identifier, where a difference between the second identifier and an identifier of a data packet with the largest identifier among the second data packets is 1, or a difference between the second identifier and an identifier of the latest data packet sent to the RLC layer by the PDCP layer among the second data packets is 1.

Optionally, the second statistical data includes at least one of the following:
the second data packet for which an RLC data PDU has not been generated;
segment data of the second data packet for which an RLC data PDU has not been generated;
a first RLC data PDU generated for the second data packet, where the first RLC data PDU has not started initial transmission; and
a second RLC data PDU generated for the second data packet, where the second RLC data PDU is pending for retransmission by the RLC layer.

Optionally, the target statistical data further includes: a data packet that is located in a buffer of the RLC layer of the terminal and whose corresponding discard timer has expired.

Optionally, the apparatus further includes:
a second sending module, configured to send third indication information to the network-side device, where the third indication information is used to indicate at least one of the following:
the smallest value of the remaining time of the discard timer corresponding to the target statistical data; and
the largest value of the running time of the discard timer corresponding to the target statistical data.

Optionally, the preset time is configured by the network-side device or prescribed by a protocol.

Optionally, the apparatus further includes:
a third sending module, configured to send fourth indication information to the network-side device, where the fourth indication information is used to indicate a total data volume of data packets, in the to-be-transmitted data, whose corresponding discard timers have expired.

In this embodiment of this application, the first determining module determines target statistical data based on a remaining time of a discard timer corresponding to to-be-transmitted data, where the to-be-transmitted data is data that is to be transmitted by the terminal to a network-side device; and the first sending module sends first indication information to the network-side device, where the first indication information is used to indicate a data volume of the target statistical data. In this way, the terminal sends, to the network-side device, the data volume of the target statistical data determined based on the remaining time of the discard timer corresponding to the to-be-transmitted data, to support the network-side device in allocating an uplink transmission resource for the terminal in consideration of the data volume of the target statistical for which the discard timer has a small remaining time. This can reduce the probability that the to-be-transmitted data at the terminal side is discarded or transmission is suspended due to expiration, thereby reducing the probability of service failure at the terminal.

The information reporting apparatus in this embodiment of this application may be an electronic device, such as an electronic device with an operating system, or may be a component in an electronic device, such as an integrated circuit or a chip. The electronic device may be a terminal or another device other than a terminal. For example, the terminal may include but is not limited to the types of the terminal 11 listed above, and the another device may be a server, a network attached storage (Network Attached Storage, NAS), or the like, which is not specifically limited in this embodiment of this application.

The information reporting apparatus provided by this embodiment of this application can implement the processes implemented by the method embodiment of FIG. 2, with the same technical effects achieved. To avoid repetition, details are not described herein again.

Referring to FIG. 5, FIG. 5 is a structural diagram of an information reporting apparatus provided by an embodiment of this application. A network-side device includes the information reporting apparatus. As shown in FIG. 5, the information reporting apparatus 400 includes:
a first receiving module 401, configured to receive first indication information sent by a terminal, where the first indication information is used to indicate a data volume of target statistical data; where
the target statistical data is determined based on a remaining time of a discard timer corresponding to to-be-transmitted data of the terminal, and the to-be-transmitted data is data that is to be transmitted by the terminal to the network-side device.

Optionally, the target statistical data includes data, in the to-be-transmitted data, for which the remaining time of the discard timer is less than or equal to a preset time.

Optionally, the apparatus further includes:
an allocating module, configured to allocate an uplink transmission resource for the terminal based on the first indication information.

Optionally, the target statistical data further includes: a data packet that is located in a buffer of an RLC layer of the terminal and whose corresponding discard timer has expired.

Optionally, the preset time is configured by the network-side device or prescribed by a protocol.

Optionally, the apparatus further includes:
a second receiving module, configured to receive third indication information sent by the terminal, where the third indication information is used to indicate at least one of the following:
the smallest value of the remaining time of the discard timer corresponding to the target statistical data; and
the largest value of the running time of the discard timer corresponding to the target statistical data.

Optionally, the apparatus further includes:
a third receiving module, configured to receive fourth indication information sent by the terminal, where the fourth indication information is used to indicate a total data volume of data packets, in the to-be-transmitted data, whose corresponding discard timers have expired.

The information reporting apparatus in this embodiment of this application may be an electronic device, such as an electronic device with an operating system, or may be a component in an electronic device, such as an integrated circuit or a chip. The electronic device may be a terminal or another device other than a terminal. For example, the terminal may include but is not limited to the types of the terminal 11 listed above, and the another device may be a server, a network attached storage (Network Attached Storage, NAS), or the like, which is not specifically limited in this embodiment of this application.

The information reporting apparatus provided by this embodiment of this application can implement the processes implemented by the method embodiment of FIG. 3, with the same technical effects achieved. To avoid repetition, details are not described herein again.

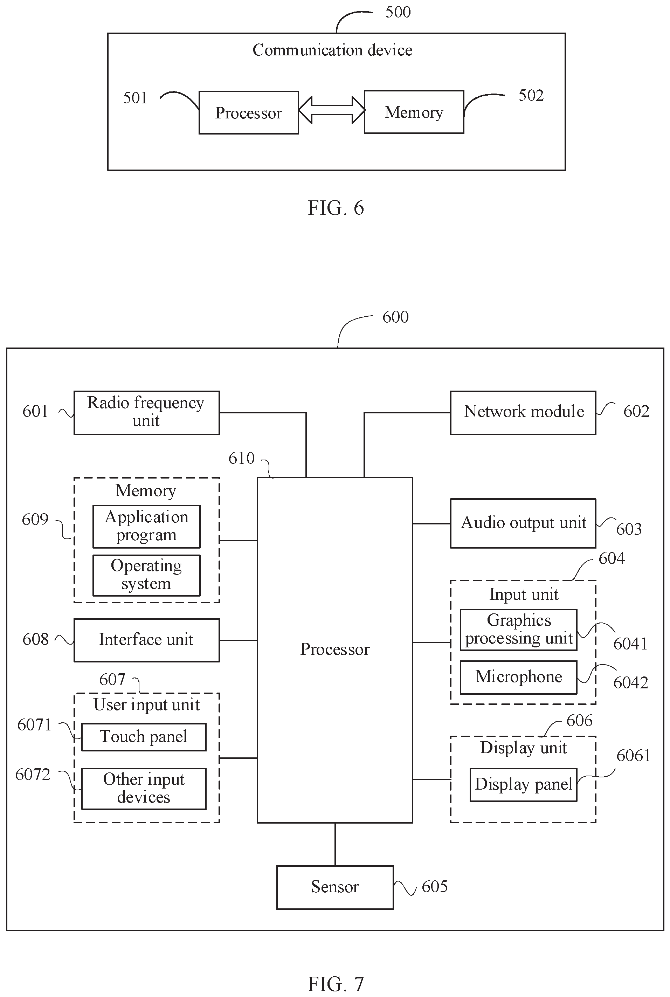

Optionally, as shown in FIG. 6, an embodiment of this application further provides a communication device 500, including a processor 501 and a memory 502, where the memory 502 stores a program or instructions executable on the processor 501. For example, in a case that the communication device 500 is a terminal, when the program or instructions are executed by the processor 501, the steps of the information reporting method embodiment applied to the terminal are implemented, with the same technical effects achieved. To avoid repetition, details are not described herein again. In a case that the communication device 500 is a network-side device, when the program or instructions are executed by the processor 501, the steps of the information reporting method embodiment applied to the network-side device are implemented, with the same technical effects achieved. To avoid repetition, details are not described herein again.

An embodiment of this application further provides a terminal, including a processor and a communication interface, where the communication interface is coupled to the processor, and the processor is configured to run a program or instructions to implement the steps in the method embodiment shown in FIG. 2. This terminal embodiment corresponds to the above-mentioned terminal-side method embodiment, and all implementation processes and implementation manners of the above-mentioned method embodiment can be applied to this terminal embodiment, with the same technical effects achieved.

Specifically, FIG. 7 is a schematic diagram of a hardware structure of a terminal for implementing an embodiment of this application.

The terminal 600 includes but is not limited to at least some of components such as a radio frequency unit 601, a network module 602, an audio output unit 603, an input unit 604, a sensor 605, a display unit 606, a user input unit 607, an interface unit 608, a memory 609, and a processor 610.

Those skilled in the art can understand that the terminal 600 may further include a power supply (such as a battery) for supplying power to various components, and the power supply may be logically connected to the processor 610 through a power management system, so as to realize functions of charging management, discharging management, and power consumption management through the power management system. The terminal structure shown in FIG. 7 does not constitute a limitation on the terminal, and the terminal may include more or fewer components than shown in the figure, or some components are combined, or components are arranged differently. Details are not described herein again.

It is to be understood that, in this embodiment of this application, the input unit 604 may include a graphics processing unit (Graphics Processing Unit, GPU) 6041 and a microphone 6042, and the GPU 6041 processes image data of a still picture or a video obtained by an image capture apparatus (such as a camera) in a video capture mode or an image capture mode. The display unit 606 may include a display panel 6061, and the display panel 6061 may be configured in the form of a liquid crystal display, an organic light emitting diode, or the like. The user input unit 607 includes at least one of a touch panel 6071 and other input devices 6072. The touch panel 6071 is also referred to as a touch screen. The touch panel 6071 may include two parts: a touch detection apparatus and a touch controller. The other input devices 6072 may include but are not limited to a physical keyboard, a function button (such as a volume control button and a switch button), a trackball, a mouse, and an operating lever. Details are not described herein again.

In this embodiment of this application, the radio frequency unit 601 receives downlink data from a network-side device and then sends the downlink data to the processor 610 for processing; in addition, the radio frequency unit 601 may send uplink data to the network-side device. Generally, the radio frequency unit 601 includes but is not limited to an antenna, an amplifier, a transceiver, a coupler, a low noise amplifier, and a duplexer.

The memory 609 may be used to store a software program or instructions and various data. The memory 609 may mainly include a first storage area for storing a program or instructions and a second storage area for storing data, where the first storage area may store an operating system, an application program or instructions required by at least one function (such as a sound playback function and an image playback function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes but is not limited to these memories and any other suitable type of memories.

The processor 610 may include one or more processing units. Optionally, the processor 610 integrates an application processor and a modem processor, where the application processor mainly processes operations involving an operating system, a user interface, an application program, and the like, and the modem processor mainly processes wireless communication signals, for example, being a baseband processor. It can be understood that the modem processor may alternatively not be integrated into the processor 610.

The processor 610 is configured to: determine target statistical data based on a remaining time of a discard timer corresponding to to-be-transmitted data, where the to-be-transmitted data is data that is to be transmitted by the terminal to a network-side device.

The radio frequency unit 601 is configured to: send first indication information to the network-side device, where the first indication information is used to indicate a data volume of the target statistical data.

Optionally, the target statistical data includes data, in the to-be-transmitted data, for which the remaining time of the discard timer is less than or equal to a preset time.

Optionally, the target statistical data includes at least one of first statistical data and second statistical data, and the processor 610 is specifically configured to perform at least one of the following:
determining, through a packet data convergence protocol PDCP layer of the terminal, a first data packet in the PDCP layer based on the remaining time of the discard timer corresponding to the to-be-transmitted data, where the first statistical data includes the first data packet; and
determining, through the PDCP layer of the terminal, a second data packet that has been transmitted to a radio link control RLC layer of the terminal based on the remaining time of the discard timer corresponding to the to-be-transmitted data, where the second statistical data is determined based on the second data packet.

Optionally, the first data packet includes a data packet, in the PDCP layer, for which the remaining time of the discard timer is less than or equal to a preset time;
or
the second data packet includes a data packet that is transmitted to the RLC layer of the terminal and for which the remaining time of the corresponding discard timer is less than or equal to a preset time.

Optionally, the processor 610 is further configured to:
determine, through the RLC layer of the terminal, the second statistical data based on the second data packet.

Optionally, the processor 610 is further configured to:
receive, through the RLC layer of the terminal, second indication information sent by the PDCP layer of the terminal, where the second indication information is used to indicate the second data packet.

Optionally, the second indication information includes at least one of the following:
an identifier of the second data packet;
a first identifier, where the first identifier is an identifier of a data packet with the largest identifier among the second data packets, or the first identifier is an identifier of the latest data packet sent to the RLC layer by the PDCP layer among the second data packets; and
a second identifier, where a difference between the second identifier and an identifier of a data packet with the largest identifier among the second data packets is 1, or a difference between the second identifier and an identifier of the latest data packet sent to the RLC layer by the PDCP layer among the second data packets is 1.

Optionally, the second statistical data includes at least one of the following:
the second data packet for which an RLC data PDU has not been generated;
segment data of the second data packet for which an RLC data PDU has not been generated;
a first RLC data PDU generated for the second data packet, where the first RLC data PDU has not started initial transmission; and
a second RLC data PDU generated for the second data packet, where the second RLC data PDU is pending for retransmission by the RLC layer.

Optionally, the target statistical data further includes: a data packet that is located in a buffer of the RLC layer of the terminal and whose corresponding discard timer has expired.

Optionally, the radio frequency unit 601 is further configured to:
send third indication information to the network-side device, where the third indication information is used to indicate at least one of the following:
the smallest value of the remaining time of the discard timer corresponding to the target statistical data; and
the largest value of the running time of the discard timer corresponding to the target statistical data.

Optionally, the preset time is configured by the network-side device or prescribed by a protocol.

Optionally, the radio frequency unit 601 is further configured to:
send fourth indication information to the network-side device, where the fourth indication information is used to indicate a total data volume of data packets, in the to-be-transmitted data, whose corresponding discard timers have expired.

It can be understood that for the implementation processes of each implementation manner mentioned in this embodiment, reference may be made to the relevant description in the method embodiment of FIG. 2, with the same or corresponding technical effects achieved. To avoid repetition, details are not described herein again.

Specifically, the terminal in this embodiment of this application further includes: instructions or a program stored on the memory 609 and executable on the processor 610, where the processor 610 calls the instructions or program in the memory 609 to execute the methods executed by the modules shown in FIG. 4, with the same technical effects achieved. To avoid repetition, details are not described herein again.

An embodiment of this application further provides a network-side device, including a processor and a communication interface, where the communication interface is coupled to the processor, and the processor is configured to run a program or instructions to implement the steps of the method embodiment shown in FIG. 3. This network-side device embodiment corresponds to the above-mentioned information reporting method embodiment applied to the network-side device, and all implementation processes and implementation manners of the above-mentioned method embodiment can be applied to this network-side device embodiment, with the same technical effects achieved.

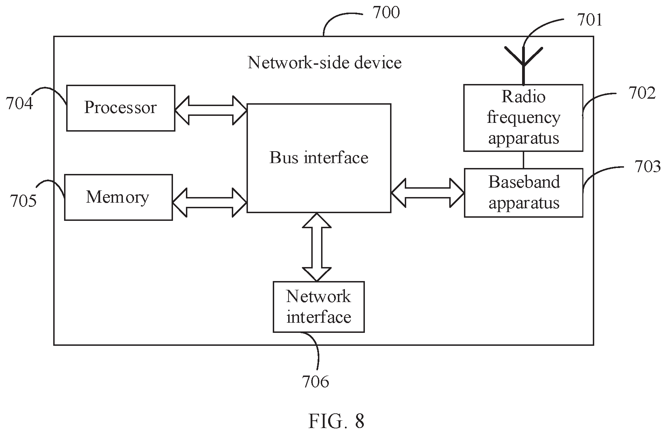

Specifically, an embodiment of this application further provides a network-side device. As shown in FIG. 8, the network-side device 700 includes: an antenna 701, a radio frequency apparatus 702, a baseband apparatus 703, a processor 704, and a memory 705. The antenna 701 is connected to the radio frequency apparatus 702. In an uplink direction, the radio frequency apparatus 702 receives information through the antenna 701 and sends the received information to the baseband apparatus 703 for processing. In a downlink direction, the baseband apparatus 703 processes to-be-sent information and sends the to-be-sent information to the radio frequency apparatus 702, and the radio frequency apparatus 702 processes the received information and sends the information out through the antenna 701.

The method performed by the network-side device in the above embodiment may be implemented in the baseband apparatus 703, and the baseband apparatus 703 includes a baseband processor.

The baseband apparatus 703 may, for example, include at least one baseband board, and a plurality of chips are provided on the baseband board. As shown in FIG. 8, one of the chips is, for example, a baseband processor which is connected to the memory 705 through a bus interface to call a program in the memory 705 and execute the network device operation shown in the above method embodiment.

The network-side device may further include a network interface 706, where the interface is, for example, a common public radio interface (Common Public Radio Interface, CPRI).

Specifically, the network-side device 700 in this embodiment of this application further includes: instructions or a program stored on the memory 705 and executable on the processor 704, where the processor 704 calls the instructions or program in the memory 705 to execute the methods executed by the modules shown in FIG. 5, with the same technical effects achieved. To avoid repetition, details are not described herein again.

An embodiment of this application further provides a readable storage medium, where the readable storage mediums stores a program or instructions, and when the program or instructions are executed by a processor, the processes of the above-mentioned information reporting method embodiment are implemented, with the same technical effects achieved. To avoid repetition, details are not described herein again.

The processor is a processor in the terminal described in the above embodiment. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip, where the chip includes a processor and a communication interface, the communication interface is coupled to the processor, and the processor is configured to run a program or instructions to implement the processes of the above-mentioned information reporting method embodiment, with the same technical effects achieved. To avoid repetition, details are not described herein again.

It should be understood that the chip mentioned in this embodiment of this application may also be referred to as a system-level chip, a system chip, a chip system, a system-on-chip chip, or the like.

An embodiment of this application further provides a computer program/program product, where the computer program/program product is stored in a storage medium, and the computer program/program product is executed by at least one processor to implement the processes of the above-mentioned information reporting method embodiment, with the same technical effects achieved. To avoid repetition, details are not described herein again.

An embodiment of this application further provides an information determining system, including: a terminal and a network-side device, where the terminal may be configured to execute the steps of the information reporting method applied to the terminal as described above, and the network-side device may be configured to execute the steps of the information reporting method applied to the network-side device as described above.

It should be noted that, in this specification, the terms "include", "comprise", or any other variations thereof are intended to cover a non-exclusive inclusion, such that a process, method, article, or apparatus that includes a series of elements includes not only those elements but also other elements not expressly listed, or further includes elements inherent to such process, method, article, or apparatus. Without further restriction, an element defined by the statement "including one..." does not exclude the presence of another identical element in a process, method, article, or apparatus that includes the element. In addition, it should be pointed out that the scope of the methods and apparatuses in the embodiments of this application is not limited to performing functions in the order shown or discussed, but may also include performing functions in a substantially simultaneous manner or in a reverse order according to the functions involved. For example, the described methods may be performed in an order different from the order described, and various steps may also be added, omitted, or combined. In addition, features described with reference to some examples may be combined in other examples.

Through the description of the above implementations, those skilled in the art can clearly understand that the methods of the above embodiments may be implemented by means of a computer software product in combination with a necessary general hardware platform, and certainly, may alternatively be implemented by hardware. The computer software product is stored in a storage medium (such as a ROM, a RAM, a magnetic disk, or an optical disk) and includes several instructions to cause a terminal or a network-side device to execute the methods described in the embodiments of this application.

The embodiments of this application are described above with reference to the accompanying drawings, but this application is not limited to the above specific implementations. The above specific implementations are merely illustrative rather than restrictive. Under the inspiration of this application, those of ordinary skill in the art can still provide various implementations without departing from the principle of this application and the protection scope set forth in the claims, all of which should fall within the protection scope of this application.

## Claims

1. An information reporting method, comprising:
determining, by a terminal, target statistical data based on a remaining time of a discard timer corresponding to to-be-transmitted data, wherein the to-be-transmitted data is data that is to be transmitted by the terminal to a network-side device; and
sending, by the terminal, first indication information to the network-side device, wherein the first indication information is used to indicate a data volume of the target statistical data.

2. The method according to claim 1, wherein the target statistical data comprises data, in the to-be-transmitted data, for which the remaining time of the discard timer is less than or equal to a preset time.

3. The method according to claim 1 or 2, wherein the target statistical data comprises at least one of first statistical data and second statistical data, and the determining, by a terminal, target statistical data based on a remaining time of a discard timer corresponding to to-be-transmitted data comprises at least one of the following:
determining, by a packet data convergence protocol PDCP layer of the terminal, a first data packet in the PDCP layer based on the remaining time of the discard timer corresponding to the to-be-transmitted data, wherein the first statistical data comprises the first data packet; and
determining, by the PDCP layer of the terminal, a second data packet that has been transmitted to a radio link control RLC layer of the terminal based on the remaining time of the discard timer corresponding to the to-be-transmitted data, wherein the second statistical data is determined based on the second data packet.

4. The method according to claim 3, wherein
the first data packet comprises a data packet, in the PDCP layer, for which the remaining time of the discard timer is less than or equal to a preset time;
or
the second data packet comprises a data packet that is transmitted to the RLC layer of the terminal and for which the remaining time of the corresponding discard timer is less than or equal to a preset time.

5. The method according to claim 3 or 4, wherein after the determining, by the PDCP layer of the terminal, a second data packet that has been transmitted to an RLC layer of the terminal based on the remaining time of the discard timer corresponding to the to-be-transmitted data, the method further comprises:
determining, by the RLC layer of the terminal, the second statistical data based on the second data packet.

6. The method according to claim 5, wherein before the determining, by the RLC layer of the terminal, the second statistical data based on the second data packet, the method further comprises:
receiving, by the RLC layer of the terminal, second indication information sent by the PDCP layer of the terminal, wherein the second indication information is used to indicate the second data packet.

7. The method according to claim 6, wherein the second indication information comprises at least one of the following:
an identifier of the second data packet;
a first identifier, wherein the first identifier is an identifier of a data packet with the largest identifier among the second data packets, or the first identifier is an identifier of the latest data packet sent to the RLC layer by the PDCP layer among the second data packets; and
a second identifier, wherein a difference between the second identifier and an identifier of a data packet with the largest identifier among the second data packets is 1, or a difference between the second identifier and an identifier of the latest data packet sent to the RLC layer by the PDCP layer among the second data packets is 1.

8. The method according to any one of claims 3 to 7, wherein the second statistical data comprises at least one of the following:
the second data packet for which an RLC data PDU has not been generated;
segment data of the second data packet for which an RLC data PDU has not been generated;
a first RLC data PDU generated for the second data packet, wherein the first RLC data PDU has not started initial transmission; and
a second RLC data PDU generated for the second data packet, wherein the second RLC data PDU is pending for retransmission by the RLC layer.

9. The method according to any one of claims 2 to 8, wherein the target statistical data further comprises: a data packet that is located in a buffer of the RLC layer of the terminal and whose corresponding discard timer has expired.

10. The method according to any one of claims 1 to 8, wherein the method further comprises:
sending, by the terminal, third indication information to the network-side device, wherein the third indication information is used to indicate:
the smallest value of the remaining time of the discard timer corresponding to the target statistical data.

11. The method according to claim 2, wherein the preset time is configured by the network-side device or prescribed by a protocol.

12. The method according to any one of claims 1 to 11, wherein the method further comprises:
sending, by the terminal, fourth indication information to the network-side device, wherein the fourth indication information is used to indicate a total data volume of data packets, in the to-be-transmitted data, whose corresponding discard timers have expired.

13. The method according to claim 10, wherein the first indication information and the third indication information are both contained in a report reported by the terminal.

14. The method according to any one of claims 1 to 13, wherein the remaining time of the discard timer is a difference between the largest running time of the discard timer and an elapsed running time of the discard timer at a target time, and the target time is a time of initial transmission over an air interface of report signaling carrying information of the remaining time.

15. The method according to claim 13, wherein the first indication information is a BS index value.

16. The method according to claim 13, wherein the BS index value and the third indication information are reported per LCG.

17. An information reporting method, comprising:
receiving, by a network-side device, first indication information sent by a terminal, wherein the first indication information is used to indicate a data volume of target statistical data; wherein
the target statistical data is determined based on a remaining time of a discard timer corresponding to to-be-transmitted data of the terminal, and the to-be-transmitted data is data that is to be transmitted by the terminal to the network-side device.

18. The method according to claim 17, wherein the target statistical data comprises data, in the to-be-transmitted data, for which the remaining time of the discard timer is less than or equal to a preset time.

19. The method according to claim 17 or 18, wherein after the receiving, by a network-side device, first indication information sent by a terminal, the method further comprises:
allocating, by the network-side device, an uplink transmission resource for the terminal based on the first indication information.

20. The method according to claim 18 or 19, wherein the target statistical data further comprises: a data packet that is located in a buffer of an RLC layer of the terminal and whose corresponding discard timer has expired.

21. The method according to claim 18, wherein the preset time is configured by the network-side device or prescribed by a protocol.

22. The method according to any one of claims 17 to 19 and 21, wherein the method further comprises:
receiving, by the network-side device, third indication information sent by the terminal, wherein the third indication information is used to indicate:
the smallest value of the remaining time of the discard timer corresponding to the target statistical data.

23. The method according to any one of claims 17 to 22, wherein the method further comprises:
receiving, by the network-side device, fourth indication information sent by the terminal, wherein the fourth indication information is used to indicate a total data volume of data packets, in the to-be-transmitted data, whose corresponding discard timers have expired.

24. The method according to claim 22, wherein the first indication information and the third indication information are both contained in a report reported by the terminal.

25. The method according to any one of claims 17 to 24, wherein the remaining time of the discard timer is a difference between the largest running time of the discard timer and an elapsed running time of the discard timer at a target time, and the target time is a time of initial transmission over an air interface of report signaling carrying information of the remaining time.

26. The method according to claim 24, wherein the first indication information is a BS index value.

27. The method according to claim 24, wherein the BS index value and the third indication information are reported per LCG.

28. An information reporting apparatus, wherein a terminal comprises the information reporting apparatus, and the apparatus comprises:
a first determining module, configured to determine target statistical data based on a remaining time of a discard timer corresponding to to-be-transmitted data, wherein the to-be-transmitted data is data that is to be transmitted by the terminal to a network-side device; and
a first sending module, configured to send first indication information to the network-side device, wherein the first indication information is used to indicate a data volume of the target statistical data.

29. An information reporting apparatus, wherein a network-side device comprises the information reporting apparatus, and the apparatus comprises:
a receiving module, configured to receive first indication information sent by a terminal, wherein the first indication information is used to indicate a data volume of target statistical data; wherein
the target statistical data is determined based on a remaining time of a discard timer corresponding to to-be-transmitted data of the terminal, and the to-be-transmitted data is data that is to be transmitted by the terminal to the network-side device.

30. A terminal, comprising a processor and a memory, wherein the memory stores a program or instructions executable on the processor; and when the program or instructions are executed by the processor, the steps of the information reporting method according to any one of claims 1 to 16 are implemented.

31. A network-side device, comprising a processor and a memory, wherein the memory stores a program or instructions executable on the processor; and when the program or instructions are executed by the processor, the steps of the information reporting method according to any one of claims 17 to 27 are implemented.

32. A chip, comprising a processor and a communication interface, wherein the communication interface is coupled to the processor and the processor is configured to run a program or instructions to implement the steps of the information reporting method according to any one of claims 1 to 16 or to implement the steps of the information reporting method according to any one of claims 17 to 27.

33. A readable storage medium, wherein the readable storage medium stores a program or instructions; and when the program or instructions are executed by a processor, the steps of the information reporting method according to any one of claims 1 to 16 are implemented, or the steps of the information reporting method according to any one of claims 17 to 27 are implemented.
